# EUROPÄISCHE PATENTSCHRIFT

(11) **EP 3 934 845 B1**
(45) Veröffentlichungstag und Bekanntmachung des Hinweises auf die Patenterteilung: **08.01.2025**
(21) Anmeldenummer: 20719392.1
(22) Anmeldetag: 14.04.2020
(51) Int. Cl.: B27B 31/00, B27M 1/08

(54) **VERFAHREN UND VORRICHTUNG ZUM AUSRICHTEN PLATTENFÖRMIGER WERKSTÜCKE**
APPARATUS FOR ALIGNING PLANAR WORKPIECES
PROCÉDÉ ET DISPOSITIF D'ALIGNEMENT DE PIÈCES EN FORME DE PANNEAU

(30) Priorität: 15.04.2019 DE 102019109864
(43) Veröffentlichungstag der Anmeldung: 12.01.2022
(73) Patentinhaber: IMA Schelling Deutschland GmbH, 32312 Lübbecke (DE)
(72) Erfinder: NIEBUR, Dirk, 32609 Hüllhorst (DE); LÜCKL, Oliver, 32609 Hüllhorst (DE)
(74) Vertreter: Schober, Mirko
(86) Internationale Anmeldenummer: PCT/EP2020/060389
(87) Internationale Veröffentlichungsnummer: WO 2020/212306

(56) Entgegenhaltungen:
- EP-A1- 2 949 421
- EP-A1- 3 241 788
- WO-A1-03/090969
- WO-A1-2019/219755
- US-A- 4 790 584

## Beschreibung

### Technisches Gebiet

Die Erfindung betrifft ein Verfahren zum Ausrichten plattenförmiger Werkstücke nach dem Oberbegriff des Anspruchs 1 sowie eine Vorrichtung zum Ausrichten plattenförmiger Werkstücke nach dem Oberbegriff des Anspruchs 10 (siehe z.B. EP 3 241 788 A1).

### Stand der Technik

In der Holzverarbeitung müssen plattenförmige Werkstücke aus Holz oder Holzersatzstoffen zu ihrer Weiterverarbeitung definiert ausgerichtet werden. Üblicherweise geschieht dies auf einem Werkstücktisch, auf welchem die Werkstücke mittels einer Lastaufnahmeeinrichtung abgelegt und gegen Anschläge geschoben werden. Entsprechende Lastaufnahmeeinrichtungen, zum Beispiel Saugspanner oder dergleichen, sind in der Regel in allen drei Raumrichtungen verfahrbar, sodass sie eine Platte anheben, auf eine Ablage eines Tisches ablegen und in Richtung von Anschlägen verschieben können. Da allerdings die Platten in der Regel in einer nicht definierten Position bzw. Drehlage von der Lastaufnahmeeinrichtung aufgenommen werden, bleibt diese nicht definierte Position bzw. Drehlage bei der Ablage des Werkstücks auf einer Ablagefläche erhalten. Mit anderen Worten, relativ zu den Anschlägen kann das Werkstück verdreht liegen. Da die Lastaufnahmeeinrichtungen in der Regel nur relativ grob parallel zur Ablage verfahrbar sind, fehlt es an Möglichkeiten, die Werkstücke sauber gegen die Anschläge zu fahren.

### Die Erfindung

Der Erfindung liegt daher die Aufgabe zugrunde, ein Verfahren und eine Vorrichtung zum Ausrichten plattenförmiger Werkstücke anzugeben, mit denen die geschilderten Nachteile nicht auftreten und mit denen ein ordnungsgemäßes Verfahren des plattenförmigen Werkstücks auf der Ablage gegen Anschläge möglich ist.

Gelöst wird diese Aufgabe durch ein Verfahren mit den Merkmalen des Anspruchs 1 sowie eine Vorrichtung mit den Merkmalen des Anspruchs 10. Vorteilhafte Ausführungsformen finden sich in den abhängigen Ansprüchen.

Bei dem erfindungsgemäßen Verfahren zum Ausrichten plattenförmiger Werkstücke wird ein plattenförmiges Werkstück, insbesondere aus Holz oder Holzersatzstoffen, von einer Handlingvorrichtung mit einer, insbesondere zum Anheben und Ablegen des plattenförmigen Werkstücks ausgelegten, Lastaufnahmeeinrichtung in Eingriff gebracht. Mithilfe dieser Lastaufnahmeeinrichtung wird das Werkstück auf einer Ablage abgelegt und auf der Ablage mit wenigstens einer ersten Schmalseite des Werkstücks in Richtung wenigstens eines ersten Anschlages verschoben.

Das erfindungsgemäße Verfahren sieht nun als wesentlichen Bestandteil vor, dass die Handlingvorrichtung - im Gegensatz zu herkömmlichen Vorrichtungen - über eine Mitnehmereinrichtung verfügt. Die Mitnehmereinrichtung ist erfindungsgemäß so ausgestaltet, dass sie bei Mitnahme des plattenförmigen Werkstücks eine Drehung desselben um eine Achse senkrecht zur durch das plattenförmige Werkstück beschriebenen Ebene ermöglicht. Auf diese Weise kann bei Verschieben der Handlingvorrichtung bzw. der Lastaufnahmeeinrichtung erreicht werden, dass sich ein über die Mitnehmereinrichtung mitgenommenes Werkstück beim Fahren desselben gegen den Anschlag drehen kann. Nach dem erfindungsgemäßen Verfahren wird das plattenförmige Werkstück nach Ablegen auf der Ablage dazu lediglich von der Mitnehmereinrichtung, ohne weiteren Eingriff mit der Lastaufnahmeeinrichtung im Übrigen, erfasst und so durch Bewegen der Mitnehmereinrichtung relativ zur Ablage gegen den wenigstens einen Anschlag gefahren.

Die Mitnehmereinrichtung ist bevorzugt Teil der Lastaufnahmeeinrichtung und lässt sich unabhängig von der sonstigen Lastaufnahmeeinrichtung betätigen.

Nach einer vorteilhaften Ausführungsform der vorliegenden Erfindung ist vorgesehen, dass vor dem Angreifen der Mitnehmereinrichtung an das plattenförmige Werkstück eine Angriffsposition am plattenförmigen Werkstück durch eine Maschinensteuerung ermittelt wird. Anschließend wird die Mitnehmereinrichtung an der Angriffsposition mit dem plattenförmigen Werkstück in Eingriff gebracht. Da die Mitnehmereinrichtung die Drehachse definiert, um die sich das plattenförmige Werkstück beim Fahren gegen den Anschlag dreht, wird die Maschinensteuerung, abhängig von der konkreten Lage des abgelegten Werkstücks, ermitteln, an welcher Stelle der optimale Angriffspunkt der Mitnehmereinrichtung liegt. Die Maschinensteuerung berücksichtigt dabei, dass die Mitnehmereinrichtung parallel zur Werkstückebene in Richtung des wenigstens einen Anschlags verschoben wird und dabei das Werkstück gedreht wird.

Der wenigstens eine Anschlag kann nach einer vorteilhaften Ausführungsform eine Erfassungseinrichtung umfassen, welche das Anschlagen eines Werkstücks an dem entsprechenden Anschlag erfasst. Eine entsprechende Erfassung dient vor allem dazu, festzustellen, ob ein Werkstück mit einer vorgegebenen Geometrie nach dem Anschlagen richtig zur Weiterverarbeitung positioniert ist.

Dazu kann insbesondere vorgesehen sein, dass das Anschlagen an die Maschinensteuerung in Form von Anschlagsignalen kommuniziert wird. Hierbei wertet die Maschinensteuerung die empfangenen Anschlagsignale in Bezug auf die Abmessungen des Werkstücks aus.

Nach einer weiteren vorteilhaften Ausführungsform der Erfindung wird das plattenförmige Werkstück durch Bewegen der Mitnehmereinrichtung im Eingriffszustand mit dem plattenförmigen Werkstück zuerst gegen einen ersten Anschlag gefahren und daran ausgerichtet und anschließend gegen einen zweiten Anschlag gefahren und daran ausgerichtet. Mit diesem Verfahren wird das Werkstück nicht nur richtungsmäßig ausgerichtet, sondern es wird auch in eine vorgegebene Position gebracht.

Als besonders vorteilhaft hat es sich erwiesen, wenn das plattenförmige Werkstück nach dem Fahren gegen den wenigstens einen Anschlag auf der Ablage fixiert wird. Durch die Fixierung nach der Ausrichtung kann eine Steuerung die Werkstückpositionsdaten speichern und für die weitere Bewegung des Werkstücks benutzen.

In einem ganz besonders vorteilhaften Verfahren sind die Lastaufnehmereinrichtung und/oder die Mitnehmereinrichtung mit dem plattenförmigen Werkstück durch Ansaugen in Eingriff bringbar. Durch Ansaugen lässt sich der Eingriff auch schnell wieder lösen.

Das Ausrichten des Werkstücks erfolgt bevorzugt in horizontaler Ebene. Um das Werkstück, gerade wenn es von unten unterstützt wird, durch das Bearbeitungsverfahren zu bewegen, sind keine großen Haltekräfte nötig und der Weitertransport kann sehr energiesparend durchgeführt werden.

Gelöst wird die oben genannte Aufgabe weiter durch eine Vorrichtung nach Anspruch 10.

Bei einer vorteilhaften Ausführungsform der Vorrichtung sind die Lastaufnahmeeinrichtung und die Mitnehmereinrichtung unabhängig voneinander mit dem plattenförmigen Werkstück, insbesondere durch Ansaugen, in Eingriff bringbar.

Bei einer weiteren vorteilhaften Ausführungsform ist die Mitnehmereinrichtung, insbesondere um eine Achse senkrecht zur Ebene des plattenförmigen Werkstücks, drehbar ausgebildet. So lässt sich das Werkstück in der Ebene drehen, indem die Mitnehmereinrichtung mit dem Werkstück in Eingriff gebracht und entsprechend parallel zur Werkstückebene bewegt wird.

Erfindungsgemäß ist die Mitnehmereinrichtung an der Lastaufnahmeeinrichtung angeordnet.

Durch eine derartige Anordnung kann die Mitnehmereinrichtung mit dem Werkstück in Eingriff gebracht werden, nachdem die Lastaufnahmeeinrichtung das plattenförmige Werkstück auf der Ablage abgelegt hat. Nach dem Ablegen des Werkstücks auf der Ablage löst die Lastaufnahmeeinrichtung die Eingriffe, so dass das Werkstück nur noch von der Mitnehmereinrichtung gehalten wird. Ist die Mitnehmereinrichtung an der Lastaufnahmeeinrichtung vorgesehen, kann die Mitnehmereinrichtung die translatorische Bewegungsmimik der Lastaufnahmeeinrichtung bei der Ausrichtung nutzen. Ist also die Mitnehmereinrichtung an der Lastaufnahmeeinrichtung angeordnet, bevorzugt ist sie dann dieser gegenüber nicht parallel zur Ebene des plattenförmigen Werkstücks verschieblich, erfolgt die oben beschriebene Bewegung der Mitnehmereinrichtung relativ zur Ablage zum Fahren des Werkstücks gegen den wenigstens einen Anschlag durch Bewegen der Lastaufnahmeeinrichtung. Die Ausrichtfunktion der Mitnehmereinrichtung an dem einen oder den mehreren Anschlägen kann daher weitestgehend von der Lastaufnahmeeinrichtung übernommen werden. Dies spart zusätzliche Bewegungsfreiheitsgrade - die für das Verschieben parallel zur Ebene des plattenförmigen Werkstücks erforderlich sein können - ein, die bei der Lastaufnahmeeinrichtung ja ohnehin vorhanden sind. Es ist allerdings auch denkbar, dass die Mitnehmereinrichtung separat von der Lastaufnahmeeinrichtung vorgesehen und unabhängig von dieser bewegt werden kann. Weiter kann die Mitnehmereinrichtung innerhalb der Lastaufnahmeeinrichtung senkrecht zur Werkstückebene bewegbar ausgebildet sein.

Bei einer ganz besonders vorteilhaften erfindungsgemäßen Vorrichtung ist die Lastaufnahmeeinrichtung und/oder die Mitnehmereinrichtung wenigstens in zwei verschiedenen, insbesondere zueinander senkrechten, und parallel zur Ebene des plattenförmigen Werkstücks verlaufenden Raumrichtungen (X, Y) beweglich. Bei einer solchen Anordnung ist der Rechenaufwand einer Steuerung relativ gering, da die Bewegungen leicht berechnet werden können, insbesondere, wenn die beiden Bewegungsrichtungen senkrecht zueinander angeordnet sind.

Ebenfalls hat es sich als besonders vorteilhaft erwiesen, wenn der wenigstens eine Anschlag bewegbar ist. So kann er auf die Abmessungen des Werkstücks und die nachfolgenden Bearbeitungsschritte gut angepasst werden. Bei einer bevorzugten Ausführungsform umfasst der wenigstens eine Anschlag eine Erfassungseinrichtung, die dazu ausgelegt ist, zu erfassen, wenn ein Werkstück mit dem Anschlag Kontakt hat.

### Weg zur Ausführung der Erfindung

Im Folgenden soll die Erfindung anhand der Figuren näher erläutert werden.
Figur 1 zeigt schematisch eine erfindungsgemäße Vorrichtung vor dem Eingriff der Handlingvorrichtung an das plattenförmige Werkstück in Draufsicht;
Figur 2 zeigt die Vorrichtung aus Figur 1 nach der Aufnahme des Werkstücks mit der Handlingvorrichtung;
Figur 3 zeigt dieselbe Vorrichtung, nachdem das Werkstück am ersten Anschlag ausgerichtet wurden und
Figur 4 zeigt die Vorrichtung nach der Ausrichtung an dem zweiten Anschlag.

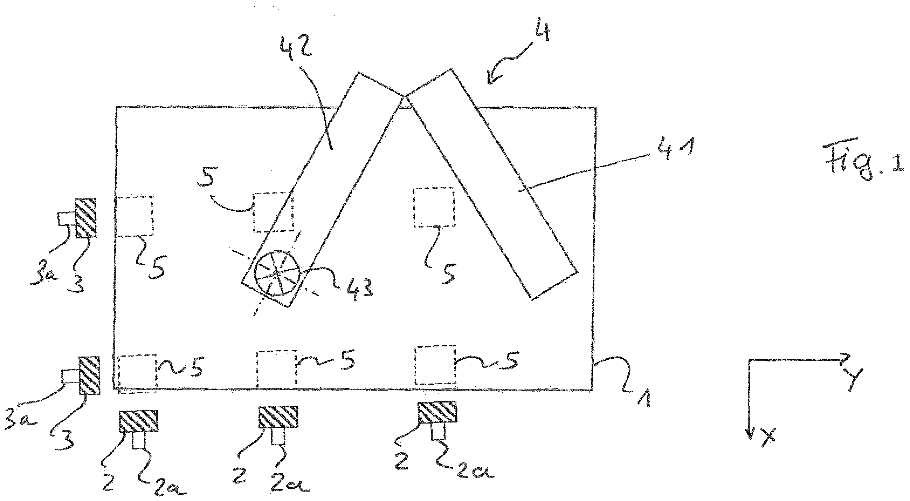

Figur 1 zeigt schematisch in Draufsicht ein plattenförmiges Werkstück 1, das auf einer Ablage 5 angeordnet ist, welche hier durch gestrichelte Vierecke angedeutet ist. Die hier gezeigte Anordnung ist so gewählt, dass das plattenförmige Werkstück 1 waagerecht ausgerichtet ist. Im Randbereich der Ablage 5 sind an zwei benachbarten Seiten des Werkstücks 1 Anschläge 2, 3 so angeordnet, dass sich beim Berühren der, insbesondere aller, Anschläge 2, 3 das Werkstück 1 in der Sollposition befindet. Hierzu sind die Anschläge 2, 3 bevorzugt einzeln einstellbar, so dass sie der Kontur des Werkstücks 1 entsprechend ausgerichtet werden können. Dies ist insbesondere dann von Vorteil, wenn es sich bei dem plattenförmigen Werkstück 1 nicht um ein rechteckiges Werkstück handelt. Jeder der Anschläge 2, 3 kann bevorzugt mit einer Erfassungsvorrichtung 2a, 3a ausgestattet sein, die den Anschlag des Werkstücks 1 erfasst und so der Steuerung signalisiert, dass an dem Anschlag 2, 3 die Sollposition des Werkstücks 1 erreicht ist, solange das Werkstück 1 den Anschlag 2, 3 berührt. Oberhalb des plattenförmigen Werkstücks 1 ist eine Handlingvorrichtung 4 angeordnet, die über wenigstens eine, hier beispielhaft zwei, Lastaufnahmeeinrichtung/en 41, 42 und eine Mitnehmereinrichtung 43 verfügt. Die Mitnehmereinrichtung 43 ist bevorzugt an einer Lastaufnahmeeinrichtung 41, 42 drehbeweglich angeordnet, während die Lastaufnahmeeinrichtung 41, 42 parallel zu den Raumrichtungen X und Y und der Höhe Z verfahrbar ist.

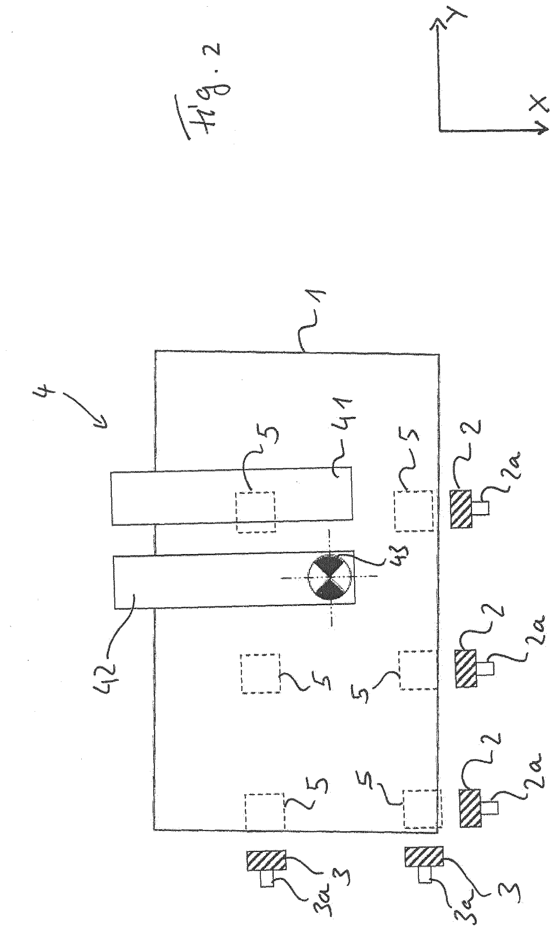

In der in Figur 1 gezeigten Situation befinden sich die Lastaufnahmeeinrichtungen 41, 42 mit dem plattenförmigen Werkstück 1 in Eingriff und transportieren es auf die Ablage 5, auf die sie es ablegen. Auf der Ablage 5 liegend lässt sich das Werkstück 1 leicht in der Ebene bewegen. Die Ablage 5 kann dazu dabei Rollen, Gleitelemente, Luftkissen oder andere Tragelemente aufweisen. Die Lastaufnahmeeinrichtung 41, 42 gibt das Werkstück 1 frei, wenn es auf der Ablage 5 zu liegen kommt. Als nächstes wird, wie es Figur 2 zeigt, die angeordnete Mitnehmereinrichtung 43 mit dem Werkstück in Eingriff gebracht. Dies erfolgt bevorzugt mittels Ansaugen.

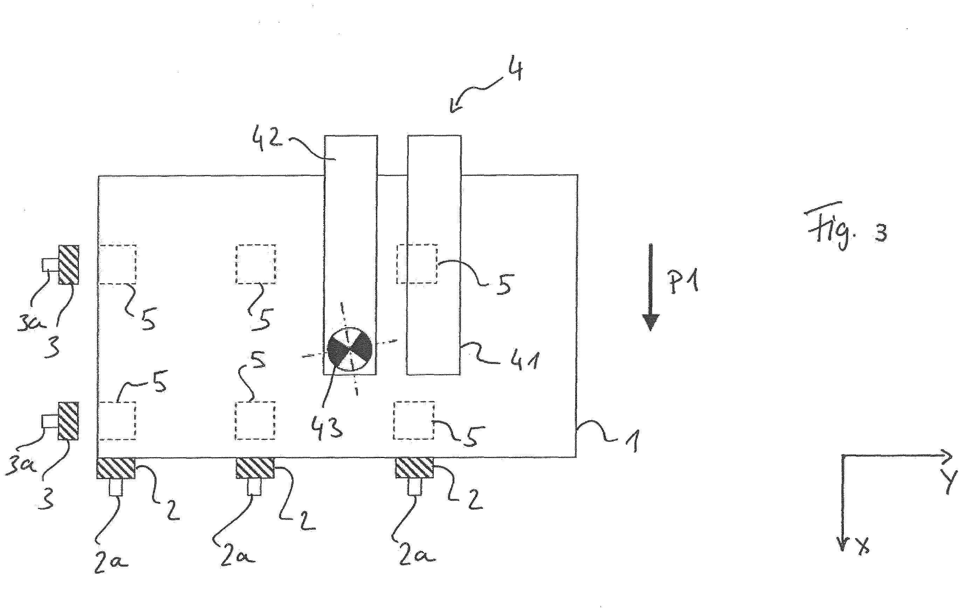

Figur 3 zeigt die Ausrichtung des Werkstücks 1 an der ersten Seite, die den Anschlägen 2 zugewandt ist. Dazu bewegt sich die Lastaufnahmeeinrichtung 41, 42 in X-Richtung, insbesondere die Lastaufnahmeeinrichtung 42, an der die dieser gegenüber der drehbar ausgebildeten Mitnehmereinrichtung 43 angeordnet ist, auf die Anschläge 2 zu. Die ursprüngliche Lage des Werkstücks 1 weist darauf hin, dass der rechte Anschlag 2 zuerst von dem Werkstück 1 berührt wird, wenn das Werkstück 1 mittels der Mitnehmereinrichtung 43 in X-Richtung verschoben wird. Bei einem weiteren Verschieben der Lastaufnahmeeinrichtungen 41, 42 in X-Richtung, dreht sich das Werkstück 1 im Gegenuhrzeigersinn, bis es an allen Anschlägen 2 anliegt und alle drei Erfassungseinrichtungen 2a der Seite einen gleichen Druck P1 an die Steuerung melden.

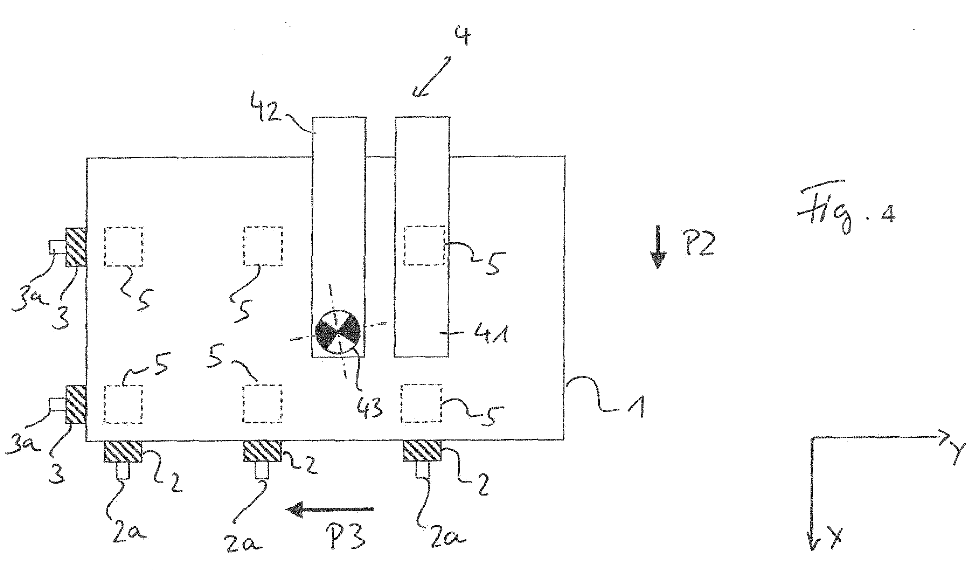

Figur 4 zeigt den nächsten Schritt der Ausrichtung, bei dem das Werkstück 1 an die Anschläge 3 der benachbarten Seite gedrückt wird. Dazu bewegt sich die Lastaufnahmeeinrichtung 41, 42 mit der Mitnehmereinrichtung 43 in Y-Richtung, bis das Werkstück 1 in Richtung P3 gegen die Anschläge 3 drückt. Gleichzeitig wird leichter Druck P2 gegen die ersten Anschläge 2 aufrechterhalten, damit die erste Ausrichtung durch die Bewegung nicht verloren geht. Ist der Anschlag vollzogen bzw. melden eventuell vorhandene Erfassungseinrichtungen 2a, 3a die entsprechenden vorgegebenen Werte an die Steuerung, kann eine vorgesehene Bearbeitung des so ausgerichteten Werkstücks 1 begonnen werden.

## Patentansprüche

1. Verfahren zum Ausrichten plattenförmiger Werkstücke (1), bei welchem ein plattenförmiges Werkstück (1), insbesondere aus Holz oder Holzersatzstoffen, von einer Handlingvorrichtung (4) mit einer, insbesondere zum Anheben und Ablegen des plattenförmigen Werkstücks (1) ausgelegten, Lastaufnahmeeinrichtung (41, 42) in Eingriff gebracht und auf einer Ablage (5) abgelegt und auf der Ablage (5) mit wenigstens einer ersten Schmalseite des Werkstücks (1) in Richtung wenigstens eines ersten Anschlages (2, 3) verschoben wird, wobei die Handlingvorrichtung (4) über eine an der Lastaufnahmeeinrichtung angeordnete Mitnehmereinrichtung (43) verfügt, die bei Mitnahme des plattenförmigen Werkstücks (1) eine Drehung desselben um eine Achse senkrecht zur durch das plattenförmige Werkstück (1) beschriebenen Ebene ermöglicht, wobei das plattenförmige Werkstück (1) nach Ablegen auf der Ablage (5) erfasst und durch Bewegen der Mitnehmereinrichtung (43) relativ zur Ablage gegen den wenigstens einen Anschlag (2, 3) gefahren wird,
**dadurch gekennzeichnet,**
**dass** die Erfassung des plattenförmigen Werkstücks nach dem Ablegen lediglich von der Mitnehmereinrichtung (43) und ohne weiteren Eingriff mit der Lastaufnahmeeinrichtung (41, 42) im Übrigen erfolgt, wobei nach dem Ablegen des Werkstücks auf der Ablage die Lastaufnahmeeinrichtung die Eingriffe löst und die Mitnehmereinrichtung (43) gegenüber der Lastaufnahmeeinrichtung (41, 42) nicht parallel zur Ebene des plattenförmigen Werkstücks (1) verschoben wird.

2. Verfahren nach Anspruch 1,
**dadurch gekennzeichnet,**
**dass** vor dem Angreifen der Mitnehmereinrichtung (43) an das plattenförmige Werkstück (1) eine Angriffsposition am plattenförmigen Werkstück (1) durch eine Maschinensteuerung ermittelt wird und anschließend die Mitnehmereinrichtung (43) an der Angriffsposition (43) mit dem plattenförmigen Werkstück (43) in Eingriff gebracht wird.

3. Verfahren nach Anspruch 2,
**dadurch gekennzeichnet,**
**dass** der wenigstens eine Anschlag (2, 3) eine Erfassungseinrichtung (2a, 3a) umfasst, welche das Anschlagen eines Werkstücks (1) an dem entsprechenden Anschlag (2, 3) erfasst.

4. Verfahren nach Anspruch 3,
**dadurch gekennzeichnet,**
**dass** das Anschlagen an die Maschinensteuerung in Form von Anschlagsignalen kommuniziert wird, wobei die Maschinensteuerung die empfangenen Anschlagsignale in Bezug auf die Abmessungen des Werkstücks (1) auswertet.

5. Verfahren nach einem der vorigen Ansprüche,
**dadurch gekennzeichnet,**
**dass** das plattenförmige Werkstück (1) durch Bewegen der Mitnehmereinrichtung im Eingriffszustand mit dem plattenförmigen Werkstück (1) zuerst gegen einen ersten Anschlag (2) gefahren und daran ausgerichtet wird und anschließend gegen einen zweiten Anschlag (3) gefahren und daran ausgerichtet wird.

6. Verfahren nach einem der vorigen Ansprüche,
**dadurch gekennzeichnet,**
**dass** das plattenförmige Werkstück (1) nach dem Fahren gegen den wenigstens einen Anschlag (2, 3) auf der Ablage (5) fixiert wird.

7. Verfahren nach einem der vorigen Ansprüche,
**dadurch gekennzeichnet,**
**dass** die Lastaufnahmeeinrichtung (42, 42) und/oder die Mitnehmereinrichtung (43) mit dem plattenförmigen Werkstück (1) durch Ansaugen in Eingriff bringbar sind.

8. Verfahren nach einem der vorigen Ansprüche,
**dadurch gekennzeichnet,**
**dass** das Ausrichten des Werkstücks (1) in einer horizontalen Ebene erfolgt.

9. Verfahren nach einem der vorigen Ansprüche,
**dadurch gekennzeichnet,**
**dass** die Mitnehmereinrichtung (43) an der Lastaufnahmeeinrichtung (42), insbesondere dieser gegenüber nicht parallel zur Ebene des plattenförmigen Werkstücks (1) verschieblich, angeordnet ist und die Bewegung der Mitnehmereinrichtung (43) relativ zur Ablage zum Fahren des Werkstücks (1) gegen den wenigstens einen Anschlag (2, 3) durch Bewegen der Lastaufnahmeeinrichtung (42) erfolgt.

10. Vorrichtung zum Ausrichten plattenförmiger Werkstücke (1), insbesondere zur Durchführung eines Verfahrens nach einem der vorigen Ansprüche, umfassend:
eine Handlingvorrichtung (4) mit einer, insbesondere zum Anheben und Ablegen des plattenförmigen Werkstücks (1) ausgelegten, Lastaufnahmeeinrichtung (41, 42),
eine Ablage (5) zum Ablegen der plattenförmigen Werkstücke (1),
wenigstens einen ersten Anschlag (2, 3) im Randbereich der Ablage (5),
wobei die Handlingvorrichtung (4) über eine an der Lastaufnahmeeinrichtung (41, 42) angeordnete Mitnehmereinrichtung (43) verfügt, die dazu ausgelegt ist, das plattenförmige Werkstück (1) mitzunehmen und auf der Ablage (5) zu verschieben, wobei die Mitnehmereinrichtung (43) parallel zur Ablage (5) beweglich und so ausgebildet ist, dass sie bei Mitnahme des plattenförmigen Werkstücks (1) eine Drehung desselben um eine Achse senkrecht zur durch das plattenförmige Werkstück (1) beschriebenen Ebene ermöglicht,
**dadurch gekennzeichnet,**
**dass** die Mitnehmereinrichtung (43) gegenüber der Lastaufnahmeeinrichtung (41, 42) nicht parallel zur Ebene des plattenförmigen Werkstücks (1) verschieblich ist.

11. Vorrichtung nach Anspruch 10,
**dadurch gekennzeichnet, dass** die Lastaufnahmeeinrichtung (41, 42) und die Mitnehmereinrichtung (43) unabhängig voneinander mit dem plattenförmigen Werkstück (1) insbesondere durch Ansaugen, in Eingriff bringbar sind.

12. Vorrichtung nach einem der Ansprüche 10 oder 11,
**dadurch gekennzeichnet,**
**dass** die Mitnehmereinrichtung (43), insbesondere um eine Achse senkrecht zur Ebene des plattenförmigen Werkstücks (1), drehbar ausgebildet ist.

13. Vorrichtung nach einem der Ansprüche 10 bis 12,
**dadurch gekennzeichnet,**
**dass** die Lastaufnahmeeinrichtung (41, 42) wenigstens in zwei verschiedenen, insbesondere zueinander senkrechten, und parallel zur Ebene des plattenförmigen Werkstücks (1) verlaufenden Raumrichtungen (X, Y) beweglich ist.

14. Vorrichtung nach einem der vorigen Ansprüche 10-13,
**dadurch gekennzeichnet,**
**dass** der wenigstens eine Anschlag (2, 3) bewegbar ist.

15. Vorrichtung nach einem der vorigen Ansprüche 10-14,
**dadurch gekennzeichnet,**
**dass** der wenigstens eine Anschlag (2, 3) eine Erfassungseinrichtung (2a, 3a) umfasst, die dazu ausgelegt ist, zu erfassen, wenn ein Werkstück (1) mit dem Anschlag (2, 3) Kontakt hat.

## Claims

1. Method for aligning plate-type workpieces (1) in which a plate-type workpiece (1), in particular of wood or wood substitutes, is brought into engagement by a handling device (4) with a load lifting device (41, 42), in particular one configured for lifting and setting down the plate-type workpiece (1), and is laid down on a shelf (5) and is moved on the shelf (5) with at least one first narrow side of the workpiece (1) in the direction of at least one first stop (2, 3), wherein the handling device (4) has a driver device (43) arranged on the load lifting device and whilst entraining the plate-type workpiece (1) enabling rotation of the latter about an axis perpendicular to the plane described by the plate-type workpiece (1) wherein the plate-type workpiece (1) once laid down on the shelf (5) is grasped and moved through movement of the driver device (43) relative to the shelf towards the at least one stop (2, 3)
**characterised in that**
the grasping of the plate-type workpiece once laid down is moreover carried out by the driver device (43) and without further engagement with the load lifting device (41, 42) wherein after the workpiece is laid down on the shelf the load lifting device releases the engagements and the driver device (43) is displaced relative to the load lifting device (41, 42) not parallel to the plane of the plate-type workpiece (1).

2. Method according to Claim 1
**characterised in that**
before the driver device (43) engages on the plate-type workpiece (1) an engagement position on the plate-type workpiece (1) is determined by a machine control and then the driver device (43) is brought into engagement with the plate-type workpiece (43) at the engagement position (43).

3. Method according to Claim 2
**characterised in that**
the at least one stop (2, 3) comprises a detection device (2a, 3a) which detects the stopping of workpiece (1) against the corresponding stop (2, 3).

4. Method according to Claim 3
**characterised in that**
the stopping is communicated to the machine control in the form of stop signals wherein the machine control evaluates the stop signals received in relation to the dimensions of the workpiece (1).

5. Method according to one of the preceding claims
**characterised in that**
the plate-type workpiece (1) by movement of the driver device in the engagement state with the plate-type workpiece (1) is first driven against a first stop (2) and aligned there and then is moved against a second stop (3) and aligned there.

6. Method according to one of the preceding claims
**characterised in that**
the plate-type workpiece (1) after moving against the at least one stop (2, 3) is fixed on the shelf (5).

7. Method according to one of the preceding claims
**characterised in that**
the load lifting device (42, 42) and/or the driver device (43) can be brought into engagement with the plate-type workpiece (1) through suction.

8. Method according to one of the preceding claims
**characterised in that**
the alignment of the workpiece (1) takes place in a horizontal plane.

9. Method according to one of the preceding claims
**characterised in that**
the driver device (43) is arranged displaceable on the load lifting device (42), in particular relative to the latter not parallel to the plane of the plate-type workpiece (1), and the movement of the driver device (43) relative to the shelf for moving the workpiece (1) against the at least one stop (2, 3) is carried out by moving the load lifting device (42).

10. Apparatus for aligning plate-type workpieces (1) in particular for carrying out a method according to one of the preceding claims, comprising:
a handling device (4) with a load lifting device (41, 42) designed in particular for lifting and setting down the plate-type workpiece (1),
a shelf (5) for setting down the plate-type workpieces (1),
at least one first stop (2, 3) in the edge region of the shelf (5),
wherein the handling device (4) has a driver device (43) which is arranged on the load lifting device (41, 42) and which is configured to entrain the plate-type workpiece (1) and to move it on the shelf (5) wherein the driver device (43) is movable parallel to the shelf (5) and is configured so that during entrainment of the plate-type workpiece (1) it enables rotation of the latter about an axis perpendicular to the plane described by the plate-type workpiece (1)
**characterised in that**
the driver device (43) is displaceable relative to the load lifting device (41, 42) not parallel to the plane of the plate-type workpiece (1).

11. Apparatus according to Claim 10
**characterised in that**
the load lifting device (41, 42) and the driver device (43) can be brought independently of one another into engagement with the plate-type workpiece (1) in particular through suction.

12. Apparatus according to one of Claims 10 or 11
**characterised in that**
the driver device (43) is configured rotatable in particular about an axis perpendicular to the plane of the plate-type workpiece (1).

13. Apparatus according to one of Claims 10 to 12
**characterised in that**
the load lifting device (41, 42) is movable at least in two different spatial directions (X, Y) in particular at right angles to one another and running parallel to the plane of the plate-type workpiece (1).

14. Apparatus according to one of the preceding Claims 10-13
**characterised in that**
the at least one stop (2, 3) is movable.

15. Apparatus according to one of the preceding claims 10-14
**characterised in that**
the at least one stop (2, 3) comprises a detection device (2a, 3a) which is configured to detect when a workpiece (1) has contact with the stop (2, 3).

## Revendications

1. Procédé d'alignement des pièces en forme de plaque (1), dans lequel une pièce (1) en forme de plaque, en particulier composée de bois ou de dérivés de bois, est amenée en prise par un dispositif de manutention (4) avec un système de réception de charges (41, 42) configuré en particulier pour soulever et déposer la pièce (1) en forme de plaque et est déposée sur une structure de réception (5) est déplacée sur la structure de réception (5) par au moins une première tranche de la pièce (1) en direction d'au moins une première butée (2, 3), dans lequel le dispositif de manutention (4) dispose d'un système d'entraînement (43) agencé au système de réception de charges qui permet, lors de l'entraînement de la pièce (1) en forme de plaque, une rotation de celle-ci autour d'un axe de manière perpendiculaire par rapport au plan décrit par la pièce (1) en forme de plaque, dans lequel la pièce (1) en forme de plaque, une fois déposée sur la structure de réception (5), est saisie et est déplacée contre l'au moins une butée (2, 3) par rapport à la structure de réception du fait du déplacement du système d'entraînement (43), **caractérisé en ce**
**que** la saisie de la pièce en forme de plaque après le dépôt est fait seulement par le système d'entraînement (43) et sans une autre prise avec le système de réception de charges (41, 42), dans lequel, après le dépôt de la pièce sur la structure de réception, le système de réception de charges (41, 42) relâche les prises et le système d'entraînement (43) par rapport au système de réception de charges (41, 42) n'est pas déplacé parallèlement au plan de la pièce (1) en forme de plaque.

2. Procédé selon la revendication 1,
**caractérisé en ce**
**qu'**avant l'application du système d'entraînement (43) à la pièce (1) en forme de plaque, une position d'application à la pièce (1) en forme de plaque est déterminée par une commande de machine et ensuite le système d'entraînement (43) est amené en prise avec la pièce (1) en forme de plaque à la position d'application (43).

3. Procédé selon la revendication 2,
**caractérisé en ce**
**que** l'au moins une butée (2, 3) comporte un dispositif de détection (2a, 3a), qui détecte comment la pièce (1) est appuyer la butée (2, 3) correspondante.

4. Procédé selon la revendication 3,
**caractérisé en ce**
**que** l'appuie à la commande de machine est communiqué en forme de signaux de butée, dans lequel la commande de machine évalue les signaux de butée reçus par rapport aux dimensions de la pièce (1).

5. Procédé selon l'une quelconque des revendications précédentes, **caractérisé en ce**
**que** la pièce (1) en forme de plaque par déplacement du système d'entraînement (43) en état de prise avec la pièce (1) en forme de plaque est d'abord déplacée contre une première butée (2) et est alignée sur celle-ci et ensuite est déplacée contre une deuxième butée (3) et est alignée sur celle-ci.

6. Procédé selon l'une quelconque des revendications précédentes, **caractérisé en ce**
**que** la pièce (1) en forme de plaque est fixée sur la structure de réception (5) après le déplacement contre l'au moins une butée (2, 3).

7. Procédé selon l'une quelconque des revendications précédentes **caractérisé en ce**
**que** le système de réception de charges (41, 42) et/ou le système d'entraînement (43) peuvent être amenés en prise avec la pièce (1) en forme de plaque par aspiration.

8. Procédé selon l'une quelconque des revendications précédentes **caractérisé en ce**
**que** l'alignement de la pièce (1) est réalisé dans un plan horizontal.

9. Procédé selon l'une quelconque des revendications précédentes, **caractérisé en ce**
**que** le système d'entraînement (43) est agencé au système de réception de charges (41, 42), surtout non pas déplaçable parallèlement au plan du pièce (1) en forme de plaque par rapport au système de réception de charges (41, 42), et le déplacement du système d'entraînement (43) par rapport à la structure de réception pour déplacer la pièce (1) contre l'au moins une butée (2, 3) est réalisé par déplacement du système de réception de charges (41, 42).

10. Dispositif d'alignement des pièces (1) en forme de plaque, surtout pour réaliser un procédé selon l'une quelconque des revendications précédentes, comportant:
un dispositif de manutention (4) avec un système de réception de charges (41, 42), configuré en particulier pour soulever et déposer la pièce (1) en forme de plaque,
une structure de réception (5) pour déposer les pièces (1) en forme de plaque,
au moins une première butée (2, 3) au bord de la structure de réception (5),
dans lequel le dispositif de manutention (4) dispose d'un système d'entraînement (43) agencé au système de réception de charges, qui est configuré pour entraîner la pièce (1) en forme de plaque et la déplacer sur la structure de réception (5), dans lequel le système d'entraînement (43) est mobile parallèlement à la structure de réception (5) et est configuré pour permettre, lors de l'entraînement de la pièce (1) en forme de plaque, une rotation de celle-ci autour d'un axe de manière perpendiculaire par rapport au plan décrit par la pièce (1) en forme de plaque,
**caractérisé en ce**
**que** le système d'entraînement (43), par rapport au système de réception de charges (41, 42), n'est pas déplaçable parallèlement au plan de la pièce (1) en forme de plaque.

11. Dispositif selon la revendication 10,
**caractérisé en ce**
**que** le système de réception de charges (41, 42) et le système d'entraînement (43) peuvent être amenés en prise avec le pièce (1) en forme de plaque indépendamment l'un de l'autre, surtout par aspiration.

12. Dispositif selon l'une quelconque des revendications 10 ou 11, **caractérisé en ce**
**que** le système d'entraînement (43) est conçu pour être rotatif, surtout autour d'un axe perpendiculairement au plan de la pièce (1) en forme de plaque.

13. Dispositif selon l'une quelconque des revendications 10 à 12, **caractérisé en ce**
**que** le système de réception de charges (41, 42) est mobile au moins dans deux directions spatiales (X, Y) différentes, surtout perpendiculaire les une aux autres et parallèlement au plan de la pièce (1) en forme de plaque.

14. Dispositif selon l'une quelconque des revendications précédentes 10 à 13,
**caractérisé en ce**
**que** l'au moins une butée (2, 3) est mobile.

15. Dispositif selon l'une quelconque des revendications précédentes 10 à 14,
**caractérisé en ce**
**que** l'au moins une butée (2, 3) comporte un dispositif de détection (2a, 3a), qui est conçu pour détecter lorsque une pièce (1) est en contact avec la butée (2, 3).
